# EUROPÄISCHE PATENTSCHRIFT

(11) **EP 1 510 122 B1**
(45) Veröffentlichungstag und Bekanntmachung des Hinweises auf die Patenterteilung: **24.01.2007**
(21) Anmeldenummer: 04018814.6
(22) Anmeldetag: 09.08.2004
(51) Int. Cl.: A01D 43/06

(54) **Rasentraktor mit einem Mähwerk und einem Auswurfschacht**
Lawn tractor with a mowing device and a discharge chute
Tracteur-tondeuse avec dispositif de fauchage et canal de décharge

(30) Priorität: 27.08.2003 DE 20313237 U
(43) Veröffentlichungstag der Anmeldung: 02.03.2005
(73) Patentinhaber: Farm + Garten, STM Vertriebs GmbH, 72829 Engstingen-Kohlstetten (DE)
(72) Erfinder: Bauer, Frank, 91781 Weissenburg (DE)
(74) Vertreter: Witzany, Manfred

(56) Entgegenhaltungen:
- EP-A- 1 314 347
- DE-A- 19 527 152
- FR-A- 2 792 494
- US-A1- 2003 182 914
- PATENT ABSTRACTS OF JAPAN Bd. 2000, Nr. 19, 5. Juni 2001 (2001-06-05) & JP 2001 045827 A (KUBOTA CORP), 20. Februar 2001 (2001-02-20)

## Beschreibung

Die Erfindung betrifft einen Rasentraktor mit einem Mähwerk und einem Auswurfschacht gemäß dem Oberbegriff des Patentanspruchs 1.

Aus der EP 0 678 235 B1 ist ein Rasentraktor bekannt, der ein an einem Fahrzeugrahmen befestigtes Mähwerk aufweist. Am Fahrzeugrahmen sind außerdem gelenkte Vorderräder und angetriebene Hinterräder abgestützt. Heckseitig ist am Fahrzeugrahmen zusätzlich ein Behälter zur Aufnahme des Mähguts verschwenkbar gehalten. Dieser Behälter steht über einem rohrartigen Auswurfschacht mit dem Mähwerk in Verbindung. Über diesen Auswurfschacht wird das Mähgut vom Mähwerk in den Behälter befördert. Dabei verläuft der Auswurfschacht zwischen dem nach oben gezogenen Fahrzeugrahmen der angetriebenen Hinterachse des Rasentraktors.

Aus der DE 195 27 152 A ist ein weiterer Rasentraktor bekannt, dessen Hinterräder auf getrennten Achsen gelagert sind. Diese Achsen werden von Hydromotoren angetrieben, welche sich seitlich neben einem Auswurfkanal für das Mähgut befinden.

Aus der EP 1 314 347 A ist ein gattungsgemäßer Rasentraktor bekannt, der einen unten offenen Auswurfschacht aufweist. Auch hier sind die Antriebsräder auf getrennten Achsen gelagert, um Platz für den Auswurfschacht zu schaffen. Die Antriebskraft eines Motors wird dabei über Kegelradgetriebe zu den Antriebsrädern geleitet, wodurch der Freiraum für den Auswurfschaft entsprechend eingeengt ist.

Der Erfindung liegt die Aufgabe zugrunde, einen Rasentraktor der eingangs genannten Art zu schaffen, der sich durch eine höhere Betriebssicherheit auszeichnet.

Diese Aufgabe wird erfindungsgemäß mit den Merkmalen des Patentanspruchs 1 gelöst.

Der Rasentraktor gemäß Anspruch 1 weist ein Mähwerk auf, welches vorzugsweise von einem rotierenden Messerträger gebildet ist, an dem Schneidmesser vorgesehen sind. Das Mähwerk weist zudem Mittel zum Auswerfen des Mähguts auf, die das Mähgut über einen Auswurfschacht in einen aufnehmenden Behälter befördern. Um zu verhindern, daß der Auswurfschacht bei vermehrt ankommendem Mähgut verstopft, ist der Auswurfschacht unterseitig offen ausgebildet. Die Mittel zum Auswerfen des Mähguts sind dabei derart ausgebildet, daß sie das Mähgut nach hinten und oben werfen, so daß das Mähgut am unten offenen Auswurfschacht ausreichend sicher geführt wird, ohne nach unten zu fallen. Im Falle einer Stauung des Mähguts im Auswurfschacht fällt dieses einfach nach unten, so daß das Mähgut keinerlei Verstopfung im Auswurfschacht verursachen kann. Durch erneutes Überfahren dieser Stelle mit dem Rasentraktor, kann das Mähgut erneut aufgenommen und in den Behälter befördert werden. Um zu verhindern, daß die Hinterachse des Rasentraktors die Flugbahn des Mähguts in irgendeiner Form beeinträchtigt, ist es günstig, wenn jedes Hinterrad auf einer eigenen Antriebsachse am Fahrzeugrahmen abgestützt ist. Dabei bleibt der Raum unterhalb des Auswurfschachtes im wesentlichen frei. Insbesondere muß das Mähgut in diesem Fall nicht zwischen der Hinterachse und dem oberen Führungsblech des Auswurfschachtes hindurchgedrückt werden. Als zusätzlicher positiver Nebeneffekt ergibt sich der Vorteil, daß die Hinterachse nicht durch das Mähgut verschmutzt wird, was die Reinigung des Rasentraktors erheblich vereinfacht. Zur Erzielung eines möglichst breiten Auswurfschachtes ist es wichtig, die Antriebsachsen der Hinterräder möglichst kurz auszubilden. Würde ein Fahrmotor direkt an die Antriebsachse angeflanscht werden, so würde dieser jedoch tief in den Auswurfschacht hineinragen und gegebenenfalls zu Verstopfungen des Mähguts im Auswurfschacht führen. Zur Lösung dieses Problems stehen die Antriebsachsen mit je einem Ketten- bzw. Riemenantrieb in Wirkverbindung. Dieser Ketten- bzw. Riemenantrieb ermöglicht auf sehr einfache Art und Weise eine Anbringung der Fahrmotoren oberhalb des Auswurfschachtes, so daß diese das Mähgut im Auswurfschacht in keiner Weise behindern. Jede Antriebswelle steht mit je einem Ölmotor in Wirkverbindung. Damit können sich beide Hinterräder unterschiedlich schnell drehen, so daß für Kurvenfahrten kein zusätzliches Differential erforderlich ist.

Eine besonders einfache Realisierung des Auswurfschachtes in Form eines nach unten offenen U-förmigen Profils ergibt sich aus Anspruch 2. Gegebenenfalls kann der Auswurfschacht auch von Teilen des Fahrzeugrahmens gebildet sein.

Um eine vollständige Befüllung des Behälters mit dem Mähgut sicherzustellen, ist es wichtig, daß die Einführöffnung des Behälters möglichst hoch liegt. Notwendigerweise befindet sich das Mähwerk tiefliegend unterhalb des Fahrzeugrahmens. Aus diesem Grund ist es gemäß Anspruch 3 vorteilhaft, wenn der Auswurfschacht vom Mähwerk zum Behälter ansteigend ausgebildet ist. Die Auswurfmittel des Mähwerks müssen dabei eine ausreichend steile Flugbahn des Mähguts sicherstellen, so daß dieses am Auswurfschacht geführt in den Behälter gelangt.

Zur Erzielung einer sicheren Abstützung der Antriebsachsen der Hinterräder am Fahrzeugrahmen ist es gemäß Anspruch 4 günstig, wenn der Fahrzeugrahmen im Bereich jedes Hinterrades mindestens zwei vertikale Wangen aufweist. An jeder dieser vertikalen Wangen ist dabei ein Lager zur Abstützung der Antriebsachse vorgesehen. Dadurch ist sichergestellt, daß die Antriebsachse ausreichend sicher im Fahrzeugrahmen gelagert ist, ohne vertikale Schwenkbewegungen auszuführen.

Zur Erzielung einer besonders günstigen Lagerung der Hinterachse ist es gemäß Anspruch 5 vorteilhaft, wenn sich ein Lager in etwa unterhalb der Außenkante des Auswurfschachtes und das andere Lager nahe dem Hinterrad befindet. Auf diese Weise ergibt sich ein möglichst großer Abstand zwischen den beiden Lagerstellen der Antriebsachse, wobei trotzdem der Bereich unterhalb des Auswurfschachtes frei bleibt.

Um die Lager vor Verschmutzung wirksam zu schützen, ist es gemäß Anspruch 6 günstig, wenn diese an einander zugewandten Seiten der Wangen vorgesehen sind. Die Lager befinden sich daher im Innenraum des Fahrzeugrahmens, so daß sie weder durch das abgeschnittene Mähgut im Auswurfschacht noch durch noch nicht gemähtes Gras im Bereich der Hinterräder des Rasentraktors verschmutzt werden können. Vorzugsweise sind die Wangen des Fahrzeugrahmens unterseitig durch eine Abdeckung miteinander verbunden. Auf diese Weise ist ein vollständiger Verschmutzungsschutz der Lager gewährleistet. Zusätzlich sorgt diese Abdeckung für eine weitere Aussteifung des Fahrzeugrahmens.

Der Erfindungsgegenstand wird beispielhaft anhand der Zeichnung erläutert, ohne den Schutzumfang zu beschränken.

Es zeigt:
- Figur 1: eine schematische Schnittdarstellung eines Rasentraktors und
- Figur 2: eine zugeordnete Seitenansicht des Rasentraktors gemäß Figur 1.

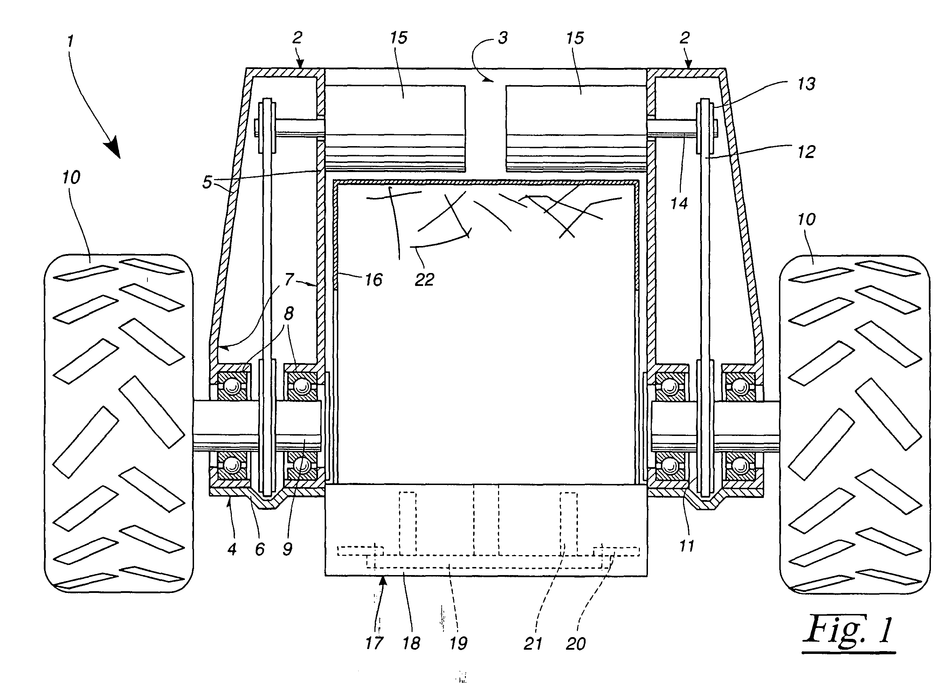

Die Figur 1 zeigt eine Schnittdarstellung eines Rasentraktors 1 bei abgenommenem Fahrersitz. Der Rasentraktor 1 weist einen Fahrzeugrahmen 2 auf, der im wesentlichen U-förmig aufgebaut ist. Dieser Fahrzeugrahmen 2 ist in seinem Frontbereich 3 geschlossen und in seinem Heckbereich 4 offen ausgebildet. Der Fahrzeugrahmen 2 weist im Heckbereich 4 an jeder Seite zwei im wesentlichen vertikal ausgerichtete Wangen 5 auf, von denen jeweils die äußere schräg nach oben zur Fahrzeugmitte hin gezogen ist. Unterseitig sind die Wangen 5 von einer Abdeckung 6 verschlossen, die lösbar an den Wangen 5 gehalten ist.

An den Wangen 5 sind an den zueinander gerichteten Flächen 7 Lager 8 zur Abstützung einer Antriebsachse 9 für ein Hinterrad 10 gehalten. Die Lager 8 sind vorzugsweise als Wälzlager ausgebildet, um eine geringe Reibung der Antriebsachse 9 zu erzielen. Durch diese Plazierung der Lager 8 sind diese durch den Rahmen 2 und die Abdeckung 6 optimal vor Verschmutzung geschützt. Durch Abnehmen der Abdeckung 6 können die Lager 8 trotzdem sehr einfach gewartet werden.

An der Antriebsachse 9 ist jeweils ein Zahnkranz 11 drehfest abgestützt, der mit einer Kette 12 zusammenwirkt. Die Kette 12 umschlingt einen weiteren Zahnkranz 13, der drehfest mit einer Antriebswelle 14 eines Ölmotors 15 verbunden ist. Jedes Hinterrad 10 ist dabei von einem eigenen Ölmotor 15 angetrieben; so daß sich die beiden Hinterräder 10 unterschiedlich schnell drehen können.

Zwischen den jeweils innenseitigen Wangen 5 ist ein Auswurfschacht 16 gehalten, der von einem nach unten offenen U-Profil gebildet ist. Der Raum unterhalb des Auswurfschachtes 16 ist frei, wobei insbesondere die beiden Antriebsachsen 9 in keiner Weise in diesen Raum eintauchen. Die beiden Ölmotoren 15 befinden sich oberhalb des Auswurfschachtes 16.

Der Auswurfschacht 16 steht mit einem Mähwerk 17 in Verbindung, welches unterseitig am Rasentraktor 1 gehalten ist. Dieses Mähwerk 17 weist ein Mähwerksgehäuse 18 auf, in dem ein rotierender Messerträger 19 gehalten ist. Am Messerträger 19 sind Messer 20 verschwenkbar gehalten. Zusätzlich weist der Messerträger 19 Räumer 21 auf, die zusammen mit dem als Grasführung ausgebildeten Mähwerksgehäuse 18 einen Auswurf des Mähguts 22 in den Auswurfschacht 16 bewirken.

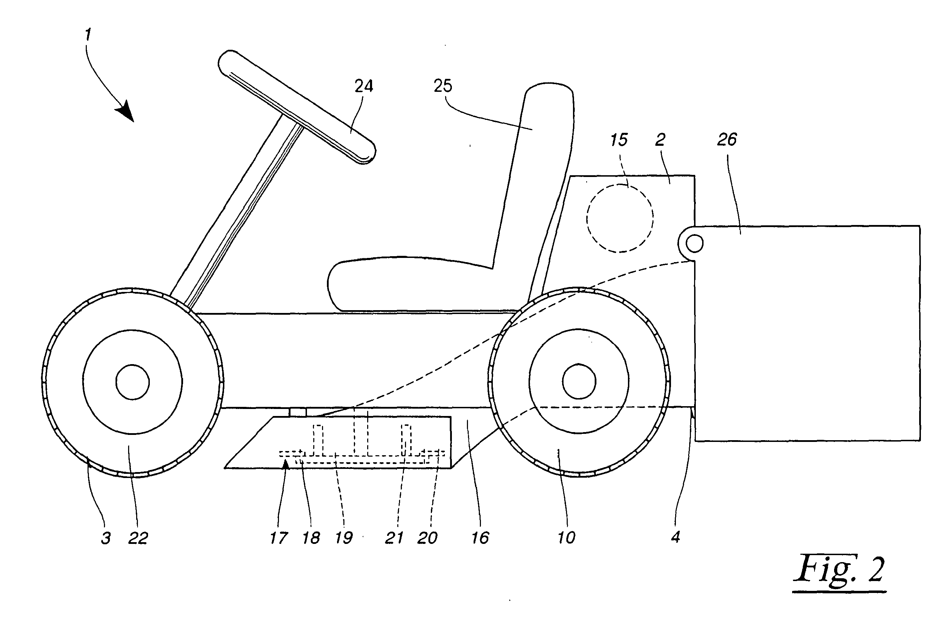

Figur 2 zeigt eine Seitenansicht des Rasentraktors 1 gemäß Figur 1. Der Rasentraktor 1 weist Vorderräder 23 auf, die mit einer Lenkung 24 verbunden sind. Außerdem ist auf dem Fahrzeugrahmen 2 ein Fahrersitz 25 abgestützt.

Der Auswurfschacht 16 verläuft vom Mähwerksgehäuse 18 zum Fahrzeugheck 4 schräg nach oben und mündet in einen abnehmbaren Behälter 26. Dieser Behälter 26 dient zur Aufnahme des Mähguts 22. Der Behälter 26 ist abnehmbar, um das aufgenommene Mähgut 22 leicht entleeren zu können

### Bezugszeichenliste

- 1: Rasentraktor
- 2: Fahrzeugrahmen
- 3: Frontbereich
- 4: Heckbereich
- 5: Wange
- 6: Abdeckung
- 7: Fläche
- 8: Lager
- 9: Antriebsachse
- 10: Hinterrad
- 11: Zahnkranz
- 12: Kette
- 13: Zahnkranz
- 14: Antriebswelle
- 15: Ölmotor
- 16: Auswurfschacht
- 17: Mähwerk
- 18: Mähwerksgehäuse
- 19: Messerträger
- 20: Messer
- 21: Räumer
- 22: Mähgut
- 23: Vorderrad
- 24: Lenkung
- 25: Fahrersitz
- 26: Behälter

## Patentansprüche

1. Rasentraktor mit einem Mähwerk (17), welches über einen Auswurfschacht (16) mit einem ein Mähgut (22) aufnehmenden Behälter (26) in Verbindung steht und der Rasentraktor (1) angetriebene Hinterräder (10) aufweist, die jeweils auf einer eigenen Antriebsachse (9) am Fahrzeugrahmen (2) abgestützt sind, wobei der Raum unterhalb des Auswurfschachtes (16) im wesentlichen frei ist und der Auswurfschacht (16) unterseitig offen ausgebildet ist, **dadurch gekennzeichnet, daß** die Hinterräder (10) über je einen Ketten- oder Riemenantrieb (11, 12, 13) mit jeweils einem oberhalb des Auswurfschachtes (16) angeordneten Ölmotor (15) verbunden sind.

2. Rasentraktor nach Anspruch 1, **dadurch gekennzeichnet, daß** der Auswurfschacht (16) von einem unten offenen U-Profil gebildet ist.

3. Rasentraktor nach Anspruch 1 oder 2, **dadurch gekennzeichnet, daß** der Auswurfschacht (16) vom Mähwerk (17) zum Behälter (26) ansteigend ausgebildet ist.

4. Rasentraktor nach mindestens einem der Ansprüche 1 bis 3, **dadurch gekennzeichnet, daß** der Fahrzeugrahmen (2) im Bereich jedes Hinterrades (10) mindestens zwei vertikale Wangen (5) aufweist, an denen Lager (8) zur Abstützung der Antriebsachse (9) vorgesehen sind.

5. Rasentraktor nach Anspruch 4, **dadurch gekennzeichnet, daß** sich eines der Lager (8) in etwa unterhalb der Außenkante des Auswurfschachtes (6) und das andere Lager (8) nahe dem Hinterrad (10) befindet.

6. Rasentraktor nach Anspruch 4 oder 5, **dadurch gekennzeichnet, daß** die Lager (8) an den einander zügewandten Seiten (7) der Wangen (5) vorgesehen sind.

## Claims

1. Lawn tractor having a mower (17), which is connected by a discharge chute (16) to a bin (26) receiving a mown material (22), and the lawn tractor (1) has driven rear wheels (10) respectively supported on a dedicated drive axle (9) on the vehicle frame (2), the space beneath the discharge chute (16) being substantially free and the discharge chute (16) configured such that it is open on the bottom side, **characterized in that** the rear wheels (10) are each connected by a chain or belt drive (11, 12, 13) to respectively an oil engine (15) disposed above the discharge chute (16).

2. Lawn tractor according to Claim 1, **characterized in that** the discharge chute (16) is formed by a U-profile which is open at the bottom.

3. Lawn tractor according to Claim 1 or 2, **characterized in that** the discharge chute (16) is configured such that it ascends from the mower (17) to the bin (26).

4. Lawn tractor according to at least one of Claims 1 to 3, **characterized in that** the vehicle frame (2), in the region of each rear wheel (10), has at least two vertical side plates (5), on which bearings (8) are provided to support the drive axle (9).

5. Lawn tractor according to Claim 4, **characterized in that** one of the bearings (8) is located roughly beneath the outer edge of the discharge chute (6) and the other bearing (8) is located close to the rear wheel (10).

6. Lawn tractor according to Claim 4 or 5, **characterized in that** the bearings (8) are provided on the mutually facing sides (7) of the side plates (5).

## Revendications

1. Tracteur-tondeuse avec un dispositif de fauchage (17) qui est en liaison par le biais d'un canal de décharge (16) avec un récipient (26) recevant un produit à faucher (22) et le tracteur-tondeuse (1) présente des roues arrière entraînées (10) qui sont supportées chacune sur un essieu d'entraînement propre (9) sur le châssis du véhicule (2), l'espace en dessous du canal de décharge (16) étant substantiellement libre et le canal de décharge (16) étant ouvert du côté inférieur, **caractérisé en ce que** les roues arrière (10) sont connectées par le biais d'un entraînement respectif par chaîne ou courroie (11, 12, 13) à chaque fois à un moteur hydraulique (15) disposé au-dessus du canal de décharge (16).

2. Tracteur-tondeuse selon la revendication 1, **caractérisé en ce que** le canal de décharge (16) est formé par un profil en U ouvert en bas.

3. Tracteur-tondeuse selon la revendication 1 ou 2, **caractérisé en ce que** le canal de décharge (16) est réalisé en pente montant depuis le dispositif de fauchage (17) vers le récipient (26).

4. Tracteur-tondeuse selon au moins l'une quelconque des revendications 1 à 3, **caractérisé en ce que** le châssis du véhicule (2) présente, dans la région de chaque roue arrière (10), au moins deux parois verticales (5) sur lesquelles sont prévus des paliers (8) pour supporter l'essieu d'entraînement (9).

5. Tracteur-tondeuse selon la revendication 4, **caractérisé en ce que** l'un des paliers (8) se trouve approximativement en dessous du bord extérieur du canal de décharge (6) et l'autre palier (8) à proximité de la roue arrière (10).

6. Tracteur-tondeuse selon la revendication 4 ou 5, **caractérisé en ce que** les paliers (8) sont prévus sur les côtés en regard (7) des parois (5).
